# EUROPEAN PATENT SPECIFICATION

(11) **EP 2 418 895 B1**
(45) Date of publication and mention of the grant of the patent: **07.01.2015**
(21) Application number: 11006654.5
(22) Date of filing: 12.08.2011
(51) Int. Cl.: H04W 52/36

(54) **Method of handling power headroom reporting for uplink carrier aggregation and communication device thereof**
Verfahren zur Abwicklung der Power-Headroom-Berichterstattung zur Uplink-Carrier-Aggregation und Kommunikationsendgerät dafür
Procédé de gestion de rapports de marge de puissance de la liaison montante avec agrégation de porteuses et dispositif de communication correspondant

(30) Priority: 12.08.2010 US 372872 P
(43) Date of publication of application: 15.02.2012
(73) Proprietor: HTC Corporation, Taoyuan County 330 (TW)
(72) Inventor: Chang, Po-Yu, Taoyuan City Taoyuan County 330 (TW)
(74) Representative: Ljungberg, Robert

(56) References cited:
- EP-A2- 2 234 316
- WO-A1-2010/051514
- WO-A2-2010/065759
- US-A1- 2010 296 470
- NOKIA SIEMENS NETWORKS: "Power headroom reporting for uplink carrier aggregation", 3GPP TSG RAN WG1 61, MONTREAL, CANADA, MAY 10TH - 14TH, 2010, R1-102946, , vol. R1-102946, no. #61 10 May 2010 (2010-05-10), pages 1-4, XP002612001, Retrieved from the Internet: URL:http://www.3gpp.org/ftp/tsg_ran/WG1_RL 1/TSGR1_61/Docs/ [retrieved on 2010-11-29]
- ALCATEL-LUCENT: "TP on Power Headroom reporting", 3GPP DRAFT; R2-082224_PH TEXT PROPOSAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080428, 28 April 2008 (2008-04-28), XP050139993, [retrieved on 2008-04-28]

## Description

### Cross Reference To Related Applications

This application claims the benefit of U.S. Provisional Application No. 61/372,872, filed on August 12, 2010 and entitled "PHR MAC format", the contents of which are incorporated herein in their entirety.

### Background of the Invention

### 1. Field of the Invention

The application relates to a method utilized in a wireless communication system and a communication device thereof, and more particularly, to a method of handling power headroom reporting in a wireless communication system and a related communication device.

### 2. Description of the Prior Art

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in Node B (NB) alone rather than in NB and RNC (Radio Network Controller) respectively, so that the system structure becomes simple.

The power headroom report (PHR) is generated by a power headroom reporting procedure, and is used to provide the serving eNB with information about the difference between the maximum UE transmission (TX) power and an estimated TX power for Uplink Share Channel (UL-SCH). With the PHR information sent by the UE, the network can allocate radio resource to the UE and make schedule decision more efficiently. In the power headroom reporting procedure, the UE uses a MAC control element of a MAC protocol data unit (PDU) to carry PHR information.

Toward advanced high-speed wireless communication system, such as transmitting data in a higher peak data rate, LTE-Advanced system is standardized by the 3rd Generation Partnership Project (3GPP) as an enhancement of LTE system. LTE-Advanced system targets faster switching between power states, improves performance at the cell edge, and includes subjects, such as bandwidth extension, coordinated multipoint transmission/reception (COMP), uplink multiple input multiple output (MIMO), etc.

For bandwidth extension, carrier aggregation (CA) is introduced to the LTE-Advanced system for extension to wider bandwidth, where two or more component carriers are aggregated, for supporting wider transmission bandwidths (for example up to 100MHz) and for spectrum aggregation. According to carrier aggregation capability, multiple component carriers are aggregated into overall wider bandwidth, where the UE can establish multiple links corresponding to the multiple (downlink and uplink) component carriers for simultaneously receiving and transmitting. On the other hand, the UE may not need to use all of the configured component carriers, and thereby only some of the multiple component carriers are activated. Please note that, when a downlink and uplink component carrier is activated, the UE shall receive PDSCH and PDCCH, and transmit PUSCH and PUCCH, and is expected to be able to perform CQI measurement.

In carrier aggregation, the UE only has one RRC connection with the network. At RRC connection establishment/re-establishment/handover, one serving cell provides the NAS mobility information, and at RRC connection re-establishment/handover, one serving cell provides the security input. This cell is referred to as a Primary serving cell (PCell). In the downlink, the carrier corresponding to the PCell is the Downlink Primary Component Carrier (DL PCC) while in the uplink it is the Uplink Primary Component Carrier (UL PCC). In addition, cells other than the PCell are named secondary serving cell (SCell). Generally, a UE configured with CA can be equipped one PCell and at most four SCells.

It is possible to configure a UE to aggregate a different number of CCs originating from the same eNB and of possibly different bandwidths in the UL and the DL. Note that, the number of DL CCs that can be configured depends on the DL aggregation capability of the UE, the number of UL CCs that can be configured depends on the UL aggregation capability of the UE, it is not possible to configure a UE with more UL CCs than DL CCs, and in typical TDD deployments, the number of CCs and the bandwidth of each CC in UL and DL is the same. In addition, the PCell is always configured with DL PCC and UL PCC, and the SCell can be configured only with DL SCC.

To enable reasonable UE battery consumption when CA is configured, an activation/deactivation mechanism of SCells is supported (i.e. activation/deactivation does not apply to PCell). On the other hand, the PCell is always activated. The activation/deactivation mechanism is based on the combination of a MAC control element and deactivation timers. The MAC control element carries a bitmap for the activation and deactivation of SCells. With the bitmap, SCells can be activated and deactivated individually, and a single activation/deactivation command can activate/deactivate a subset of the SCells. In addition, When the SCell is activated, the DL CC and UL CC (if configured) on the SCell is (are) activated.

In LTE-A system (e.g. Rel-10), it's been agreed that simultaneously PUCCH and PUSCH transmission. Consequently, eNB should take into account PUCCH and PUSCH transmission power contributing to the UE current transmission power, so as to assist eNB to schedule PUSCH and PUCCH. Note that, for uplink resource, the PCell has PUSCH and PUCCH, but SCell only has PUSCH.

For a UE supporting a single uplink component carrier in the LTE system, the UE reports a PHR only for the one uplink component carrier. For a UE supporting multiple uplink component carriers in the LTE-Advanced system, the UE has to report PHRs for multiple uplink component carriers (e.g. configured uplink component carriers). However, how to report the PHRs for the configured uplink component carrier is not clearly specified in LTE-Advanced system. More specifically, a format of a MAC control element for the PHRs is never concerned. Thus, the eNB may not know the power status of each uplink component carrier of the UE and thus incorrectly schedule radio resources to the UE.
A patent publication WO 2010/065759 A2 indicates background art which may be regarded as useful to understand the invention.

### Summary of the Invention

It is an object of the present invention to provide a method of handling PHR reporting in a wireless communication system and a related communication device. This object can be achieved by the features of the independent claims. Further embodiments are characterized by the dependent claims.

A method of handling power headroom report, hereafter called PHR, reporting for a mobile device configured with a plurality of uplink component carriers in a wireless communication system is disclosed. The method comprises generating PHRs for at least one uplink component carrier of the plurality of uplink component carriers, determining a format of a MAC control element of a MAC PDU generated by the mobile device according to a number of the at least one uplink component carrier, and reporting the PHRs with the predetermined format of the MAC control element.

A method of handling power headroom report, hereafter called PHR, reporting for a mobile device configured with a plurality of uplink component carriers in a wireless communication system is disclosed. The method comprises generating PHRs for at least one uplink component carrier of the plurality of uplink component carriers, and reporting the PHRs with a dynamic format of a MAC control element of a MAC PDU generated by the mobile device, wherein a length of the dynamic format of the MAC control element is associated with a number of the at least one uplink component carrier.

A communication device of a wireless communication system for handling power headroom report, hereafter called PHR, reporting is disclosed. The communication device is configured with a plurality of uplink component carriers in the wireless communication system and comprises means for generating PHRs for at least one uplink component carrier of the plurality of uplink component carriers, means for determining a format of a MAC control element of a MAC PDU generated by the communication device according to a number of the at least one uplink component carrier, and means for reporting the PHRs with the predetermined format of the MAC control element.

A communication device of a wireless communication system for handling power headroom report, hereafter called PHR, reporting, is disclosed. The communication device is configured with a plurality of uplink component carriers in the wireless communication system and comprises means for generating PHRs for at least one uplink component carrier of the plurality of uplink component carriers, and means for reporting the PHRs with a dynamic format of a MAC control element of a MAC PDU generated by the communication device, wherein a length of the dynamic format of the MAC control element is associated with a number of the at least one uplink component carrier.

These and other objectives of the present invention will no doubt become obvious to those of ordinary skill in the art after reading the following detailed description of the preferred embodiment that is illustrated in the various figures and drawings.

### Brief Description of the Drawings

Fig. 1 illustrates a schematic diagram of an exemplary wireless communication system.

Fig. 2 is a schematic diagram of a user equipment and multiple cells under an eNB in a wireless communication system in Fig. 1.

Fig. 3 illustrates a schematic diagram of an exemplary communication device.

Fig. 4 illustrates a schematic diagram of communication protocol layers for an exemplary communication system.

Fig. 5 is a flowchart of an exemplary process.

Fig. 6 illustrates a schematic diagram of a short format of the MAC control element.

Fig. 7 illustrates a schematic diagram of a long format of the MAC control element.

Fig. 8 is a flowchart of an exemplary process.

Fig. 9 illustrates a schematic diagram of a dynamic format of the MAC control element.

### Detailed Description

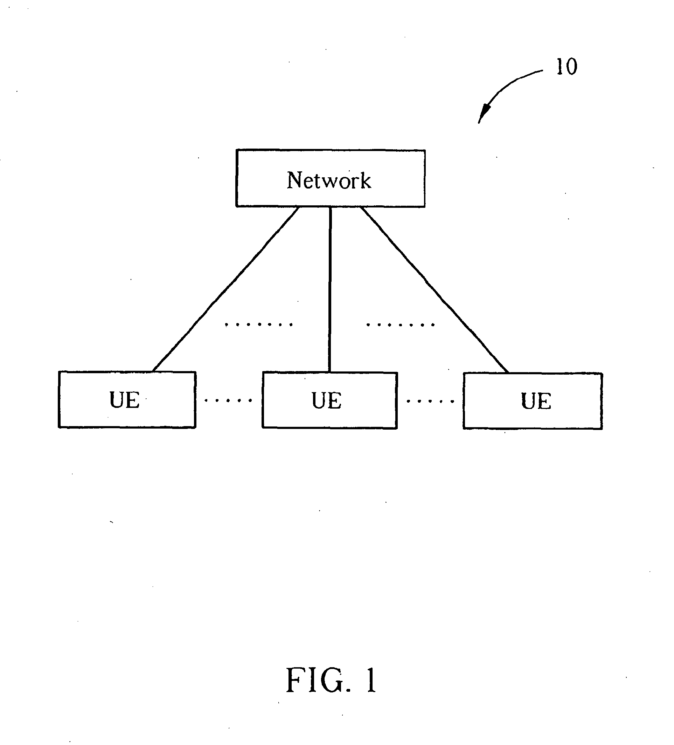

Please refer to Fig. 1, which is a schematic diagram of a wireless communication system 10. The wireless communication system 10 is a Long-Term Evolution advanced (LTE-A) system or other mobile communication systems, and is briefly composed of a network and a plurality of user equipments (UEs). In Fig. 1, the network and the UEs are simply utilized for illustrating the structure of the wireless communication system 10. Practically, the network may be an evolved universal terrestrial radio access network (E-UTRAN) comprising a plurality of evolved base stations (eNBs). The UEs can be devices such as mobile phones, computer systems, etc. Besides, the network and the UE can be seen as a transmitter or receiver according to transmission direction, e.g., for uplink (UL), the UE is the transmitter and the network is the receiver, and for downlink (DL), the network is the transmitter and the UE is the receiver.

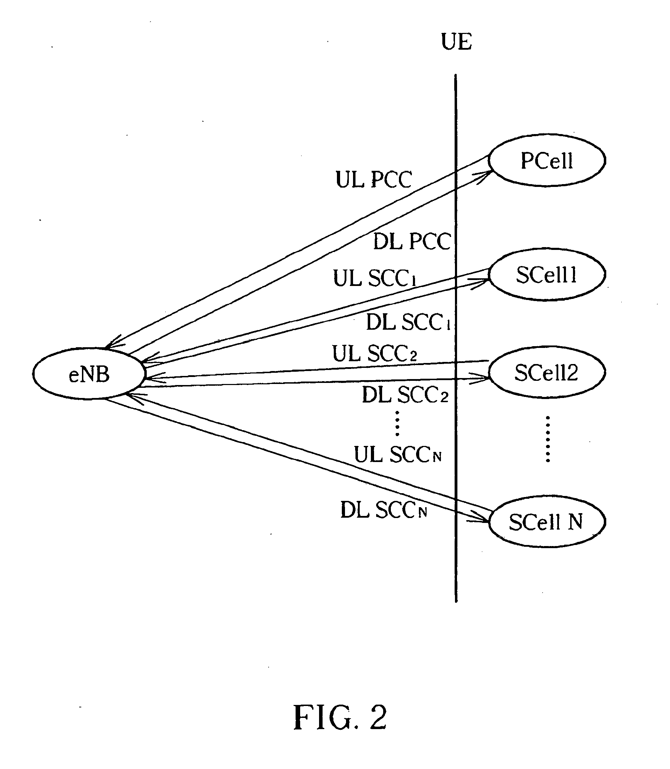

Please refer to Fig. 2, which is a schematic diagram of a UE and multiple cells under an eNB in the wireless communication system 10. The UE communicates with one primary serving cell (PCell) and several secondary serving cells (SCells), as SCell1-SCellN shown in Fig. 2, In the downlink, the component carrier corresponding to the PCell is the Downlink Primary Component Carrier (DL PCC) while in the uplink it is the Uplink Primary Component Carrier (UL PCC). Depending on UE capabilities, SCells can be configured to form together with the PCell a set of serving cells. In the downlink, the component carrier corresponding to an SCell is a Downlink Secondary Component Carrier (DL SCC) while in the uplink it is an Uplink Secondary Component Carrier (UL SCC).

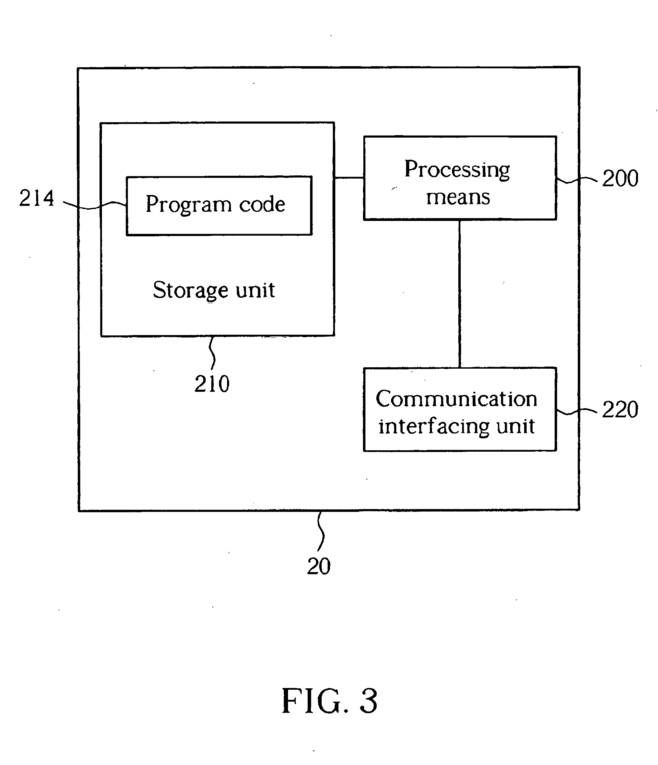

Fig. 3 illustrates a schematic diagram of an exemplary communication device 20. The communication device 20 can be the UE shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

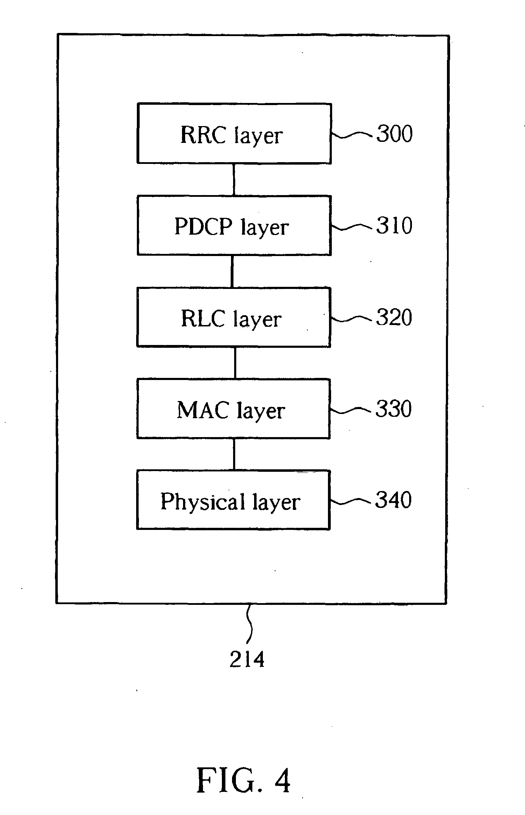

Please refer to Fig. 4, which illustrates a schematic diagram of communication protocol layers for the LTE system. The behaviors of some of the protocol layers may be defined in the program code 214 and executed by the processing means 200. The protocol layers from top to bottom are a radio resource control (RRC) layer 300, a packet data convergence protocol (PDCP) layer 310, a radio link control (RLC) layer 320, a medium access control (MAC) layer 330 and a physical (PHY) layer 340. The MAC layer 330 is responsible for generating a MAC PDU (Protocol Data Unit), and the MAC PDU includes a MAC control element for power headroom reporting, and includes a MAC subheader corresponding to the MAC control element for indicating that the MAC control element is a PHR MAC control element.

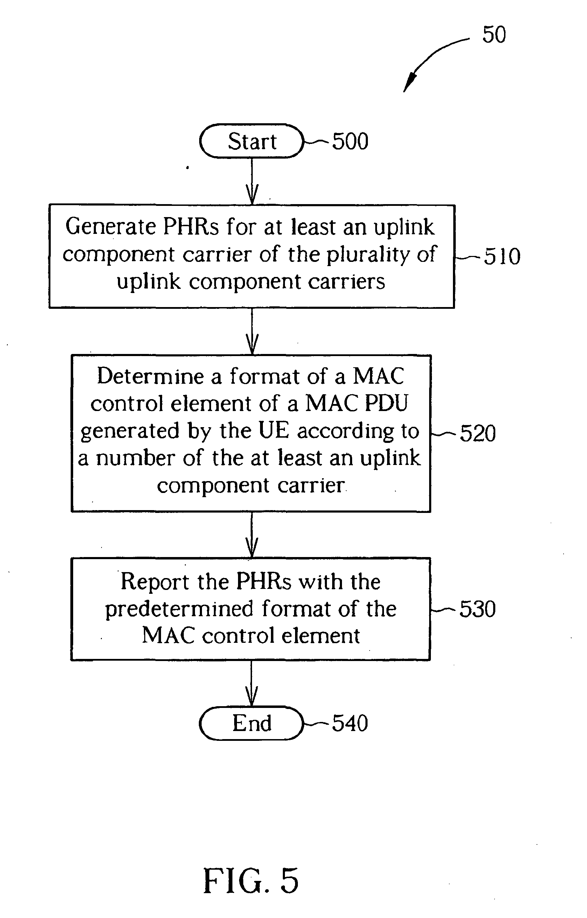

Please refer to Fig. 5, which illustrates a flowchart of an exemplary process 50. The process 50 is utilized in a UE configured with a plurality of uplink component carriers, for PHR reporting. The process 50 can be compiled into the program code 214 and includes the following steps:

Step 500: Start.

Step 510: Generate PHRs for at least one uplink component carrier of the plurality of uplink component carriers.

Step 520: Determine a format of a MAC control element of a MAC PDU generated by the UE according to a number of the at least one uplink component carrier.

Step 530: Report the PHRs with the predetermined format of the MAC control element.

Step 540: End.

According to the process 50, the UE reports the PHRs for all of the configured uplink component carriers or for ones of the configured uplink component carriers (e.g. the activated uplink component carrier) with one MAC control element. In a word, all PHRs are included in the same MAC control element. The format of the MAC control element utilized for the PHRs is fixed and is determined according to the number of the uplink configured component carriers or the activated uplink component carriers.

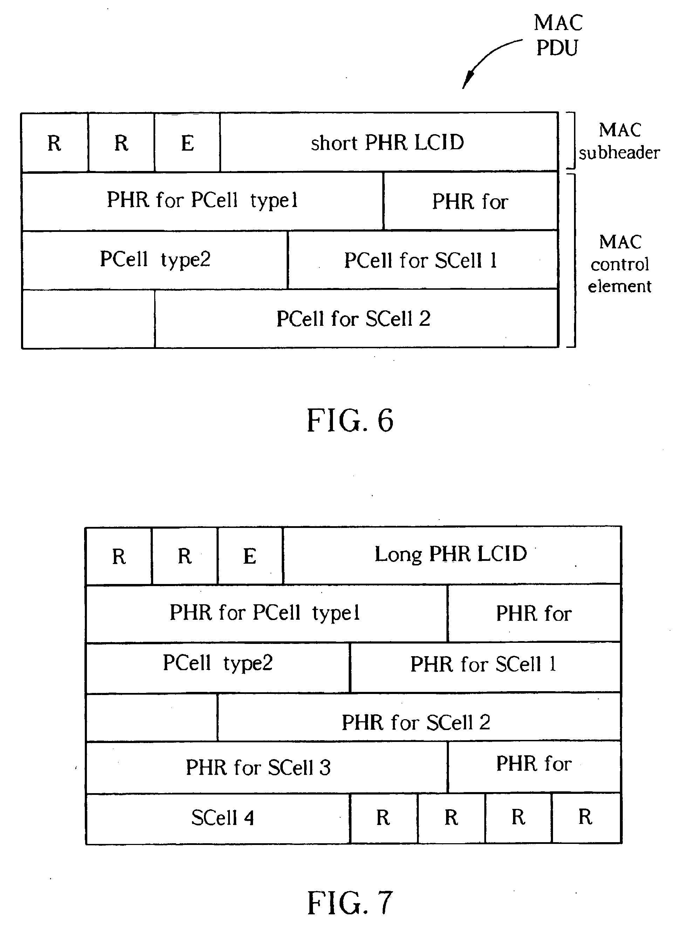

Take an example based on the process 50. Assume that the UE is configured with one PCell and two SCells (i.e. SCell1 and SCell2 in Fig. 2) which all are configured with uplink component carrier. The UE shall report PHRs for PCell, SCell1, and SCell2 in a MAC control element. Please refer to Fig. 6, which illustrates a short format of a MAC control element according to an embodiment. Note that, the PCell has PUSCH and PUCCH resource, which can be referred from the prior art, so within the MAC control element, the UE reports a PHR for PUSCH (called type 1 PHR) and a PHR for PUCCH (called type 2 PHR) on the PCell. Besides, the UE reports two PHRs for the SCell1 and SCell2 respectively. In addition, a MAC subheader corresponding to the MAC control element is necessary, wherein the MAC subheader includes a logic channel identity (LCID) field to indicate that the MAC control element is in a short format.

On the other hand, the UE may report the PHRs with a long format MAC control element. Assume that the UE is configured with one PCell and four SCells which all are configured with uplink component carrier (i.e. i.e. SCell1-SCell4 in Fig. 2). Please refer to Fig. 7, which illustrates a long format of a MAC control element according to an embodiment. Within the MAC control element, the UE reports a type 1 PHR and a type 2PHR for the PCell. Besides, the UE reports four PHRs for the SCell1-SCell4 respectively. Moreover, a MAC subheader corresponding to the MAC CE includes a LCID field to indicate that the MAC control element is in a long format.

Briefly, a short MAC control element format is utilized if a number of the SCell which is configured with uplink component carrier configured to the UE is no more than a particular number (e.g. the number is 2); otherwise, a long format MAC control element is utilized.

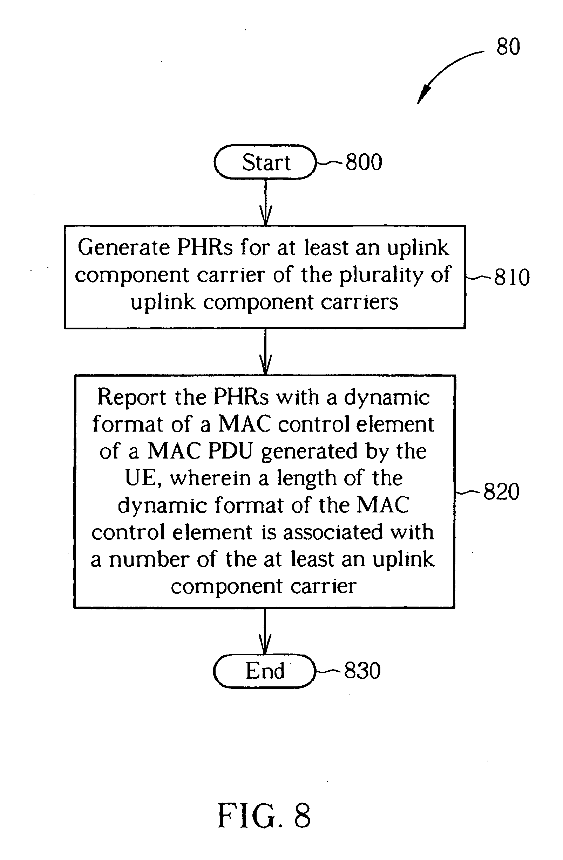

Please refer to Fig. 8, which illustrates a flowchart of an exemplary process 80. The process 80 is utilized in a UE configured with a plurality of uplink component carriers, for PHR reporting. The process 80 can be compiled into the program code 214 and includes the following steps:

Step 800: Start.

Step 810: Generate PHRs for at least one uplink component carrier of the plurality of uplink component carriers.

Step 820: Report the PHRs with a dynamic format of a MAC control element of a MAC PDU generated by the UE, wherein a length of the dynamic format of the MAC control element is associated with a number of the at least one uplink component carrier.

Step 830: End.

According to the process 80, the UE reports the PHRs for all of the configured uplink component carriers or for ones of the configured uplink component carriers (e.g. the activated uplink component carriers) with one MAC control element. Note that, the length of the MAC control element is dynamic and is determined according to the number of the configured uplink component carriers or activated uplink component carriers.

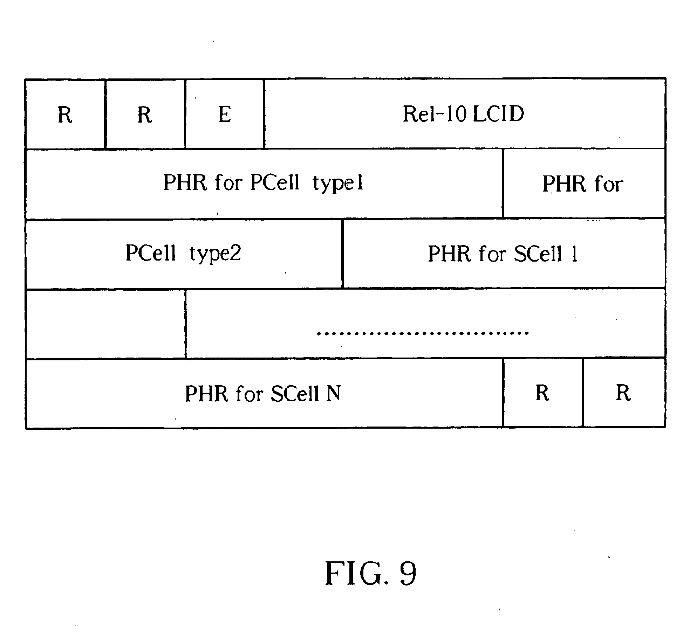

Take an example based on the process 80. Assume that the UE is configured with one PCell and N SCells which are configured with uplink component carrier (i.e. SCell1-SCellN in Fig. 2). The UE shall report PHRs for PCell and SCell1-SCellN in a MAC control element. Please refer to Fig. 9, which illustrates a dynamic format of a MAC control element according to an embodiment. Within the MAC control element, the UE reports a type 1 PHR and a type 2 PHR for the PCell. Besides, the UE reports N PHRs for the SCell1-SCellN respectively. In order to achieve byte-alignment, some reserved bits (represented as "R") may be included in the tail of the MAC control element. In addition, a MAC subheader corresponding to the MAC control element is necessary, and includes a LCID field to indicate that the MAC control element is in a dynamic format.

Please note that, in addition to report the PHRs for all of the configured uplink component carriers, the examples of Fig. 6, 7, and 9 are also applied for the activated uplink component carriers.

Please note that, the abovementioned steps of the processes including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, the present invention provides methods and apparatus for handling PHRs in multiple uplink component carrier system, to clearly define the MAC control element format for reporting the PHRs.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling power headroom report, thereafter called PHR, reporting for a communication device (UE, 20) configured with a plurality of uplink component carriers in a wireless communication system (10), the method comprising:
generating (510, 810) PHRs for at least one uplink component carrier of the plurality of uplink component carriers; **characterised by**
determining (520) a format of a MAC control element of a MAC Protocol Data Unit (PDU) generated by the communication device according to a number of the at least one uplink component carrier;
indicating the format of the MAC control element with a logic channel identity (LCID) in a MAC subheader of the MAC PDU; and
reporting (530, 820) the PHRs with the format of the MAC control element.

2. The method of claim 1, wherein determining the format of the MAC control element of the MAC PDU generated by the communication device according to the number of the at least one uplink component carrier comprises:
determining that the MAC control element is in a short format when the number of the at least one uplink component carrier is not greater than a predefined value in the communication device; and
determining that the MAC control element is in a long format when the number of the at least one uplink component carrier is greater than the predefined value.

3. The method of claim 1, wherein the format comprises a dynamic format and the step of reporting comprises reporting the PHRs with the dynamic format of the MAC control element of the MAC Protocol Data Unit (PDU) generated by the communication device, wherein a length of the dynamic format of the MAC control element is associated with a number of the at least one uplink component carrier.

4. A communication device (UE, 20) of a wireless communication system (10) for handling power headroom report, hereafter called PHR, reporting, the communication device being configured with a plurality of uplink component carriers in the wireless communication system and comprising:
means for generating (214) PHRs for at least one uplink component carrier of the plurality of uplink component carriers;
means for determining (214) a format of a MAC control element of a MAC Protocol Data Unit (PDU) generated by the communication device according to a number of the at least one uplink component carrier;
means for indicating (214) the format of the MAC control element with a logic channel identity (LCID) in a MAC subheader of the MAC PDU; and
means for reporting (220) the PHRs with the predetermined format of the MAC control element.

5. The communication device of claim 4, wherein the means for determining the format of the MAC control element of the MAC PDU generated by the communication device according to the number of the at least one uplink component carrier, comprises:
means for determining that the MAC control element is in a short format when the number of the at least one uplink component carrier is not greater than a predefined value in the communication device; and
means for determining that the MAC control element is in a long format when the number of the at least one uplink component carrier is greater than the predefined value.

6. The communication device of claim 4, wherein the format comprises a dynamic format and the means for reporting comprises means for reporting the PHRs with the dynamic format of the MAC control element of the MAC Protocol Data Unit (PDU) generated by the communication device, wherein a length of the dynamic format of the MAC control element is associated with a number of the at least one uplink component carrier.

7. A user equipment, comprising
a processing means (200);
a storage unit (210); and
a communication interfacing unit (220), wherein the storage unit is configured to store a program code (214) configured to define the means of claims 4, 5 or 6 when executed by the processing means.

## Patentansprüche

1. Ein Verfahren zum Handhaben eines Leistungsreservenberichts, hiernach PHR genannt, für eine Kommunikationsvorrichtung (UE, 20), konfiguriert mit einer Vielzahl von Aufwärtskomponententrägern in einem drahtlosen Kommunikationssystem (10), wobei das Verfahren Folgendes beinhaltet:
Erzeugen (510, 810) von PHRs für mindestens einen Aufwärtskomponententräger der Vielzahl von Aufwärtskomponententrägern; **gekennzeichnet durch** Bestimmen (520) eines Formats eines MAC-Kontrollelements einer MAC-Protokolldateneinheit (PDU), erzeugt **durch** die Kommunikationsvorrichtung gemäß einer Zahl des mindestens einen Aufwärtskomponententrägers;
Anzeigen des Formats des MAC-Kontrollelements mit einer Logikkanalidentität (LCID) in einem MAC-Subheader der MAC-PDU; und
Berichten (530, 820) der PHRs mit dem Format des MAC-Kontrollelements.

2. Verfahren gemäß Anspruch 1, wobei das Bestimmen des Formats des MAC-Kontrollelements der MAC-PDU, erzeugt durch die Kommunikationsvorrichtung gemäß der Zahl des mindestens einen Aufwärtskomponententrägers, Folgendes beinhaltet:
Bestimmen, dass das MAC-Kontrollelement in einem Kurzformat vorliegt, wenn die Zahl des mindestens einen Aufwärtskomponententrägers nicht größer als ein vordefinierter Wert in der Kommunikationsvorrichtung ist; und
Bestimmen, dass das MAC-Kontrollelement in einem Langformat vorliegt, wenn die Zahl des mindestens einen Aufwärtskomponententrägers größer als der vordefinierte Wert ist.

3. Verfahren gemäß Anspruch 1, wobei das Format ein dynamisches Format beinhaltet und der Schritt des Berichtens das Berichten der PHRs mit dem dynamischen Format des MAC-Kontrollelements der MAC-Protokolldateneinheit (PDU), erzeugt durch die Kommunikationsvorrichtung, beinhaltet, wobei eine Länge des dynamischen Formats des MAC-Kontrollelements mit einer Zahl des mindestens einen Aufwärtskomponententräges assoziiert wird.

4. Eine Kommunikationsvorrichtung (UE, 20) eines drahtlosen Kommunikationssystems (10) zum Handhaben eines Leistungsreservenberichts, hiernach PHR genannt, wobei die Kommunikationsvorrichtung mit einer Vielzahl von Aufwärtskomponententrägern in dem drahtlosen Kommunikationssystem konfiguriert ist und Folgendes beinhaltet:
Mittel zum Erzeugen (214) von PHRs für mindestens einen
Aufwärtskomponententräger der Vielzahl von Aufwärtskomponententrägern;
Mittel zum Bestimmen (214) eines Formats eines MAC-Kontrollelements einer MAC-Protokolldateneinheit (PDU), erzeugt durch die Kommunikationsvorrichtung gemäß einer Zahl des mindestens einen Aufwärtskomponententrägers;
Mittel zum Anzeigen (214) des Formats des MAC-Kontrollelements mit einer Logikkanalidentität (LCID) in einem MAC-Subheader der MAC-PDU; und
Mittel zum Berichten (220) der PHRs mit dem vorbestimmten Format des MAC-Kontrollelements.

5. Kommunikationsvorrichtung gemäß Anspruch 4, wobei das Mittel zum Bestimmen des Formats des MAC-Kontrollelements der MAC-PDU, erzeugt durch die Kommunikationsvorrichtung gemäß der Zahl des mindestens einen Aufwärtskomponententrägers, Folgendes beinhaltet:
Mittel zum Bestimmen, dass das MAC-Kontrollelement in einem Kurzformat vorliegt,
wenn die Zahl des mindestens einen Aufwärtskomponententrägers nicht größer als ein vordefinierter Wert in der Kommunikationsvorrichtung ist; und
Mittel zum Bestimmen, dass das MAC-Kontrollelement in einem Langformat vorliegt,
wenn die Zahl des mindestens einen Aufwärtskomponententrägers größer als der vordefinierte Wert ist.

6. Kommunikationsvorrichtung gemäß Anspruch 4, wobei das Format ein dynamisches Format beinhaltet und das Mittel zum Berichten Mittel zum Berichten der PHRs mit dem dynamischen Format des MAC-Kontrollelements der MAC-Protokolldateneinheit (PDU), erzeugt durch die Kommunikationsvorrichtung, beinhaltet, wobei eine Länge des dynamischen Formats des MAC-Kontrollelements mit einer Zahl des mindestens einen Aufwärtskomponententrägers assoziiert ist.

7. Ein Benutzergerät, das Folgendes beinhaltet
ein Verarbeitungsmittel (200);
eine Speichereinheit (210); und
eine Kommunikationsschnittstelleneinheit (220), wobei die Speichereinheit konfiguriert ist, um einen Programmcode (214), der konfiguriert ist, um das Mittel der Ansprüche 4, 5 oder 6, wenn ausgeführt durch das Verarbeitungsmittel, zu definieren.

## Revendications

1. Un procédé de gestion de transmission de rapports de marge de puissance, appelés ci-après PHRs, pour un dispositif de communication (UE, 20) configuré avec une pluralité de porteuses composantes en liaison montante dans un système de communication sans fil (10), le procédé comprenant :
le fait de générer (510, 810) des PHRs pour au moins une porteuse composante en liaison montante de la pluralité de porteuses composantes en liaison montante ;
**caractérisé par**
le fait de déterminer (520) un format d'un élément de contrôle MAC d'une unité de données de protocole (PDU) MAC générée par le dispositif de communication selon un nombre de l'au moins une porteuse composante en liaison montante ;
le fait d'indiquer le format de l'élément de contrôle MAC avec une identité de canal logique (LCID) dans un sous-entête MAC de la PDU MAC ; et
le fait de transmettre (530, 820) les PHRs avec le format de l'élément de contrôle MAC.

2. Le procédé de la revendication 1, dans lequel le fait de déterminer le format de l'élément de contrôle MAC de la PDU MAC générée par le dispositif de communication selon le nombre de l'au moins une porteuse composante en liaison montante comprend :
le fait de déterminer que l'élément de contrôle MAC est dans un format court lorsque le nombre de l'au moins une porteuse composante en liaison montante n'est pas supérieur à une valeur prédéfinie dans le dispositif de communication ; et
le fait de déterminer que l'élément de contrôle MAC est dans un format long lorsque le nombre de l'au moins une porteuse composante en liaison montante est supérieur à la valeur prédéfinie.

3. Le procédé de la revendication 1, dans lequel le format comprend un format dynamique et l'étape de transmission des rapports comprend le fait de transmettre les PHRs avec le format dynamique de l'élément de contrôle MAC de l'unité de données de protocole (PDU) MAC générée par le dispositif de communication, une longueur du format dynamique de l'élément de contrôle MAC étant associée à un nombre de l'au moins une porteuse composante en liaison montante.

4. Un dispositif de communication (UE, 20) d'un système de communication sans fil (10) destiné à gérer la transmission de rapports de marge de puissance, appelés ci-après PHRs, le dispositif de communication étant configuré avec une pluralité de porteuses composantes en liaison montante dans le système de communication sans fil et comprenant:
un moyen pour générer (214) des PHRs pour au moins une porteuse composante en liaison montante de la pluralité de porteuses composantes en liaison montante ;
un moyen pour déterminer (214) un format d'un élément de contrôle MAC d'une unité de données de protocole (PDU) MAC générée par le dispositif de communication selon un nombre de l'au moins une porteuse composante en liaison montante ;
un moyen pour indiquer (214) le format de l'élément de contrôle MAC avec une identité de canal logique (LCID) dans un sous-entête MAC de la PDU MAC ; et
un moyen pour transmettre (220) les PHRs avec le format prédéterminé de l'élément de contrôle MAC.

5. Le dispositif de communication de la revendication 4, dans lequel le moyen pour déterminer le format de l'élément de contrôle MAC de la PDU MAC générée par le dispositif de communication selon le nombre de l'au moins une porteuse composante en liaison montante, comprend :
un moyen pour déterminer que l'élément de contrôle MAC est dans un format court lorsque le nombre de l'au moins une porteuse composante en liaison montante n'est pas supérieur à une valeur prédéfinie dans le dispositif de communication ; et
un moyen pour déterminer que l'élément de contrôle MAC est dans un format long lorsque le nombre de l'au moins une porteuse composante en liaison montante est supérieur à la valeur prédéfinie.

6. Le dispositif de communication de la revendication 4, dans lequel le format comprend un format dynamique et le moyen pour transmettre les rapports comprend un moyen pour transmettre les PHRs avec le format dynamique de l'élément de contrôle MAC de l'unité de données de protocole (PDU) MAC générée par le dispositif de communication, une longueur du format dynamique de l'élément de contrôle MAC étant associée à un nombre de l'au moins une porteuse composante en liaison montante.

7. Un équipement utilisateur, comprenant
un moyen de traitement (200) ;
une unité de stockage (210) ; et
une unité d'interfaçage de communication (220), l'unité de stockage étant configurée pour stocker un code programme (214) configuré pour définir les moyens des revendications 4, 5 ou 6 lorsqu'il est exécuté par le moyen de traitement.
